# FASCICULE DE BREVET EUROPEEN

(11) **EP 0 908 346 B1**
(45) Date de publication et mention de la délivrance du brevet: **28.04.2004**
(21) Numéro de dépôt: 98402362.2
(22) Date de dépôt: 25.09.1998
(51) Int. Cl.: B60K 17/04, B60G 7/02, B60G 3/14

(54) **Perfectionnement à un système de suspension à bras tiré pour une roue arrière motrice d'un véhicule automobile**
Aufhängungssystem mit gezogenem Aufhängungslenker für ein angetriebenes Hinterrad eines Kraftfahrzeuges
Trailing arm suspension system for a driven rear wheel of a motor vehicle

(30) Priorité: 08.10.1997 FR 9712538
(43) Date de publication de la demande: 14.04.1999
(73) Titulaire: GIAT INDUSTRIES, 78000 Versailles (FR)
(72) Inventeur: Le Trouher, Guy, 94170 Le Perreux sur Marne (FR)
(74) Mandataire: Célanie, Christian

(56) Documents cités:
- DE-A- 1 680 218
- DE-B- 1 066 878
- DE-U- 6 948 197
- US-A- 4 453 616

## Description

La présente invention concerne un système de suspension à bras tiré pour une roue arrière motrice d'un véhicule automobile, en particulier d'un véhicule tout terrain.

D'une façon connue en soi, un tel système comprend un bras de suspension dont une extrémité est montée par l'intermédiaire d'un roulement sur la caisse du véhicule, et dont l'autre extrémité est portée par le moyeu de la roue motrice. Le bras de suspension est tubulaire et contient une transmission pour transmettre un couple moteur à la roue. Cette transmission est elle-même accouplée à une transmission logée dans un boîtier latéral relié à un arbre moteur entraîné en rotation par les moyens de propulsion du véhicule. Le boîtier latéral de transmission est situé du côté intérieur de la caisse du véhicule et fixé par l'intermédiaire du roulement précité sur la caisse.

Une suspension de roue à bras tiré de ce type est notamment décrite dans le brevet FR-A-2 706 369 déposé au nom de la Demanderesse. Dans cette configuration, le roulement doit avoir un diamètre suffisamment grand pour pouvoir recevoir le boîtier latéral dans sa cage extérieure.

Le brevet DE-1066878 décrit une suspension à bras tiré d'une roue d'un véhicule dans laquelle le boîtier latéral est disposé entre le bras tiré et la caisse du véhicule, des moyens de découplage étant prévus entre le bras tiré et le boîtier. Aucun moyen de découplage n'est prévu entre le boîtier et la caisse du véhicule. De plus, le boîtier est fixé classiquement du côté intérieur.

Cependant, la position du boîtier latéral de transmission côté intérieur de la caisse du véhicule, n'est pas sans poser des problèmes de maintenance d'une part et d'usinage d'autre part.

La maintenance du demi-essieu de la roue est rendue difficile car sa dépose nécessite celle du capotage intérieur, de toutes les vis de fixation du roulement sur la caisse, ces vis étant généralement au nombre de 24, et des cardans situés sur le boîtier latéral de transmission et fixés généralement par quatre vis peu accessibles.

L'usinage de la caisse est complexe, car le roulement doit être d'une dimension suffisante pour pouvoir laisser passer le boîtier latéral de transmission lors de la dépose, ce qui a pour conséquence de créer une interface complexe plancher de caisse-roulement.

Le but de l'invention est de pallier les inconvénients précités, et de prévoir également des moyens de découplage des vibrations engendrées par la roue d'une part et par les différentes transmissions d'autre part, qui sont transmises à la caisse du véhicule et nuisent au confort de l'habitacle.

En effet, dans une suspension à bras tiré du type précité, les éléments de suspension proprement dits qui sont prévus entre le bras tiré et la caisse sont inadaptés pour amortir notamment les vibrations engendrées par le choc de la roue contre un obstacle.

A cet effet, l'invention propose un système de suspension à bras tiré pour une roue arrière motrice d'un véhicule automobile, en particulier d'un véhicule tout terrain, comprenant un bras de suspension contenant une transmission accouplée à un boîtier latéral de transmission d'une part et au moyeu de la roue d'autre part, le bras de suspension étant accouplé au boîtier latéral par l'intermédiaire d'au moins un palier, caractérisé en ce que le bras de suspension et le boîtier latéral sont fixés à la caisse du véhicule par une interface comprenant des moyens de découplage pour amortir les vibrations résultant d'un choc de la roue contre un obstacle et les vibrations du boîtier latéral.

Selon un mode de réalisation de l'invention, l'interface est constituée par un support intermédiaire sur lequel est fixé le boîtier latéral et monté en rotation le bras de suspension au moyen du palier, et en ce que le support intermédiaire est fixé à la caisse du véhicule par un moyen de fixation avec interposition des moyens de découplage pour amortir également les vibrations engendrées par le boîtier latéral.

A titre d'exemple, le support intermédiaire constitué par un berceau, et en ce que le moyen de fixation est constitué par un boulon dont la tige traverse des passages percés dans deux ailes du berceau et un passage percé dans une protubérance qui est en saillie sur la caisse et positionnée entre les deux ailes.

Dans ce cas, les moyens de découplage des vibrations sont constitués par des bagues traversées par la tige du boulon et réalisées en un matériau élastomère, une bague logée dans le passage de la protubérance de la caisse, et deux bagues montées respectivement entre la protubérance et les deux ailes du berceau.

Selon un autre mode de réalisation de l'invention, l'interface est constituée par le boîtier latéral, en ce que le bras de suspension est monté en rotation sur le boîtier latéral au moyen de deux paliers, et en ce que le boîtier latéral est fixé à la caisse du véhicule avec interposition des moyens de découplage pour amortir également les vibrations engendrées par le boîtier latéral.

Dans ce cas, les moyens de découplage sont constitués par un bloc en un matériau élastomère.

Avantgeusement, le boîtier latéral est monté à l'extérieur de la caisse du véhicule.

Selon un avantage important de l'invention, il est possible d'amortir très efficacement les vibrations engendrées au niveau des différentes transmissions pour éviter qu'elles ne soient transmises à la caisse du véhicule, mais il est également possible d'amortir plus particulièrement les vibrations transmises par le bras tiré lors d'un choc de la roue contre un obstacle.

Selon un autre avantage de l'invention, les opérations de maintenance sont facilitées, car il est possible de disposer le boîtier latéral du côté extérieur de la caisse et de réduire ainsi les opérations d'usinage de la caisse qui étaient jusque-là nécessaires.

D'autres avantages, caractéristiques et détails ressortiront du complément de description qui va suivre en référence à des dessins annexés, donnés uniquement à titre d'exemple et dans lesquels :
- la figure 1 est une vue schématique en coupe partielle d'une suspension à bras tiré selon l'art antérieur,
- la figure 2 est une vue schématique de principe pour illustrer une suspension à bras tiré selon l'invention, et
- les figures 3 et 4 sont des vues schématiques en coupe partielle de suspensions à bras tiré pour illustrer respectivement deux modes de réalisation de l'invention.

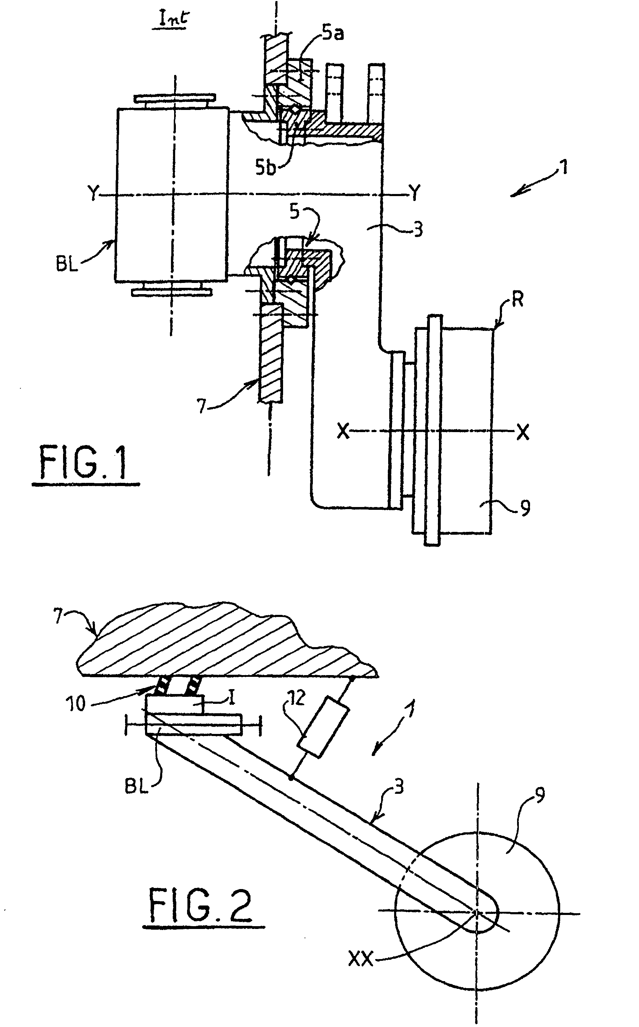

On a représenté sur la figure 1 une suspension 1 du type à bras tiré 3 d'une roue motrice R d'un véhicule selon l'art antérieur évoqué en préambule.

Une extrémité du bras de suspension 3 est fixée par un roulement 5 sur la caisse 7 du véhicule, alors que son autre extrémité porte un mécanisme réducteur 9 destiné à être logé dans le moyeu de la roue R pour entraîner celle-ci en rotation autour de son axe X-X.

Le bras de suspension 3 est tubulaire et contient une transmission (non représentée) pour transmettre un couple moteur au mécanisme réducteur 9. Cette transmission est elle-même accouplée à une transmission logée dans un boîtier latéral BL dont une entrée reçoit un arbre moteur entraîné par les moyens de propulsion du véhicule. Ce boîtier latéral de transmission BL est également fixé à la caisse 7 du véhicule au moyen de la cage extérieure fixe 5a du roulement 5, et il se trouve situé du côté intérieur Int de la caisse du véhicule. Le bras de suspension 3 est fixé à la cage intérieure 5b du roulement 5 pour être mobile en rotation autour d'un axe Y-Y parallèle à l'axe de roue X-X.

Selon l'invention, et comme cela est schématiquement illustré sur la figure 2, la suspension 1 à bras tiré 3 est fixée à la caisse 7 du véhicule au moyen d'une interface I qui comprend notamment des moyens de découplage 10 des vibrations transmises par la roue et/ou la transmission du boîtier latéral BL.

D'une manière générale, la suspension 1 est complétée par un dispositif d'amortissement classique 12 à ressort et/ou à vérin, qui est monté entre le bras 3 et la caisse 7 du véhicule.

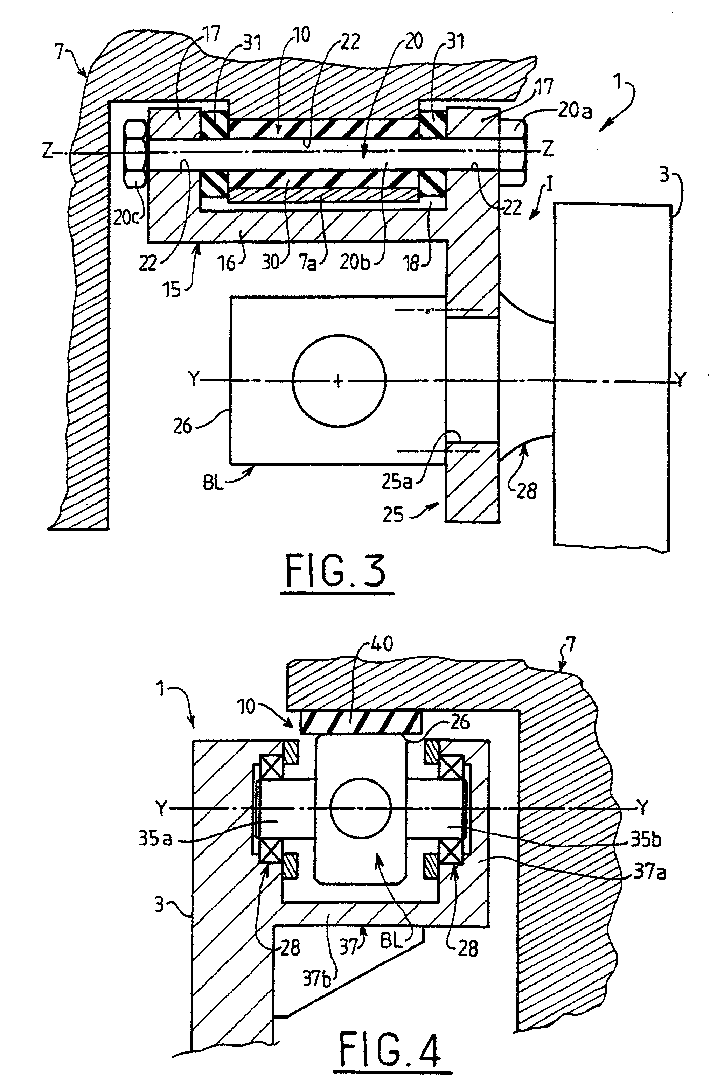

Selon le premier mode de réalisation illustré sur la figure 3, le bras de suspension 3 et le boîtier latéral de transmission BL sont fixés à la caisse 7 du véhicule par une interface I qui supporte en rotation le bras de suspension 3, est solidaire du boîtier latéral BL et est fixée à la caisse 7 avec interposition des moyens de découplage 10. Cette interface I est et constituée par une pièce de support intermédiaire 15 globalement en forme de U, dénommée ci-après berceau.

Le berceau 15 comprend une embase 16 bordée de deux ailes 17 pour délimiter ainsi un logement ouvert 18 destiné à recevoir librement une protubérance 7a en saillie sur la caisse 7. La protubérance 7a et les deux ailes 17 sont rendues solidaires par un moyen de fixation 20 qui, à titre d'exemple, est constitué par un boulon. La tête 20a du boulon vient en appui contre la face externe de l'une des ailes 17 du berceau 15, sa tige 20b traverse librement des passages 22 axialement alignés qui sont percés dans les deux ailes 17 et la protubérance 7a, et un écrou 20c qui vient se visser sur l'extrémité filetée de la tige 20b qui fait saillie au-delà de l'autre aile 17 du berceau 15.

L'embase 16 du berceau 15 se prolonge sur sa face opposée aux ailes 17, par une plaque de support 25 percée d'une ouverture centrale 25a.

Le carter 26 du boîtier latéral de transmission BL est rapporté contre la face interne (côté intérieur de la caisse 7) de la plaque 25, coaxialement à l'ouverture 25a, et fixé par des vis par exemple à cette plaque 25, alors que le bras de suspension 3 est rapporté contre la face externe de la plaque 25 par l'intermédiaire d'un palier 28 du type à roulement, par exemple.

Les moyens de découplage 10 des vibrations sont montés dans le logement 18 du berceau 15 et rapportés autour du moyen de fixation 20 pour limiter la transmission des vibrations provenant de la roue R d'une part et du boîtier latéral de transmission BL d'autre part.

Les moyens de découplage 10 comprennent une première bague 30 logée à l'intérieur du passage 22 prévu dans la protubérance 7a de la caisse 7, et deux bagues 31 également traversées par la tige 20b du boulon et qui sont montées respectivement entre la protubérance 7a de la caisse 7 et les deux ailes 17 du berceau 15.

D'une manière générale, les bagues 30 et 31 sont constituées en un matériau élastomère tel que du caoutchouc, par exemple.

Dans ce premier mode de réalisation, l'axe de fixation Z-Z entre le berceau 15 et la caisse 7 du véhicule s'étend parallèlement à l'axe de roue X-X, ce qui constitue un montage du type latéral. En variante, on pourrait prévoir un montage du type longitudinal dans lequel l'axe de fixation Z-Z s'étend perpendiculairement à l'axe de roue X-X.

Selon ce premier mode de réalisation, le boîtier latéral de transmission BL est situé du côté extérieur de la caisse 7 du véhicule.

Selon un second mode de réalisation illustré sur la figure 4, le bras de suspension 3 et le boîtier latéral de transmission BL sont fixés à la caisse 7 du véhicule par une interface I qui est constituée par le boîtier latéral BL qui est fixé à la caisse 7 avec interposition des moyens de découplage 10, et qui supporte en rotation le bras de suspension 3.

Le bras de suspension 3 est monté en rotation par l'intermédiaire de deux paliers 28 montés respectivement autour de deux demi-arbres creux 35a et 35b axialement alignés suivant un axe Y-Y parallèle à l'axe de roue X-X. Une extrémité du demi-arbre 35a est solidaire du boîtier latéral BL, alors que son autre extrémité coopère avec une extrémité du bras de suspension 3 pour supporter un palier 28. Une extrémité du demi-arbre 35b est solidaire du boîtier latéral BL, alors que son autre extrémité coopère avec une branche 37a d'une bride 37 en forme de L pour supporter un palier 28. L'autre branche 37b de la bride 37 est rendue solidaire du bras de suspension 3, sachant que la bride 37 et le bras de suspension 3 peuvent ne former qu'une seule pièce. Le demi-arbre creux 35a renferme des moyens d'accouplement (non représentés) pour accoupler la transmission du boîtier latéral BL et la transmission logée dans le bras de suspension 3.

Les moyens de découplage 10 sont constitués par un bloc 40 en un matériau élastomère qui est fixé par des moyens connus en soi, par vissage et/ou collage, au carter 26 du boîtier latéral BL d'une part et à la caisse 7 d'autre part.

Dans ce second mode de réalisation, le boîtier latéral de transmission BL est également situé du côté extérieur de la caisse 7 du véhicule.

D'une manière générale, les paliers 28 précités peuvent être du type à roulement ou d'un autre type, et les moyens de découplage 10 peuvent être en un matériau élastomère ou tout autre type de matériau élastique.

## Revendications

1. Système de suspension à bras tiré pour une roue arrière motrice d'un véhicule automobile, en particulier d'un véhicule tout terrain, comprenant un bras de suspension (3) contenant une transmission accouplée à un boîtier latéral de transmission (BL) d'une part et au moyeu de la roue (R) d'autre part, le bras de suspension (3) étant accouplé au boîtier latéral (BL) par l'intermédiaire d'au moins un palier (28), **caractérisé en ce que** le bras de suspension (3) et le boîtier latéral (BL) sont fixés à la caisse (7) du véhicule par une interface (I) comprenant des moyens de découplage (10) pour amortir les vibrations résultant d'un choc de la roue (R) contre un obstacle et les vibrations du boîtier latéral.

2. Système de transmission selon la revendication 1, **caractérisé en ce que** l'interface (I) est constituée par un support intermédiaire (15) sur lequel est fixé le boîtier latéral (BL) et monté en rotation le bras de suspension (3) au moyen du palier (28), et **en ce que** le support intermédiaire (15) est fixé à la caisse (7) du véhicule par un moyen de fixation (20) avec interposition des moyens de découplage (10) pour amortir également les vibrations engendrées par le boîtier latéral (BL).

3. Système de suspension selon la revendication 2, **caractérisé en ce que** le support intermédiaire est constitué par un berceau (15), et **en ce que** le moyen de fixation (20) est constitué par un boulon dont la tige (20b) traverse des passages (22) percés dans deux ailes (17) du berceau (15) et un passage (22) percé dans une protubérance (7a) qui est en saillie sur la caisse (7) et positionnée entre les deux ailes (17).

4. Système de suspension selon la revendication 3, **caractérisé en ce que** les moyens de découplage (10) des vibrations sont constitués par des bagues traversées par la tige (20b) du boulon et réalisées en un matériau élastomère, une bague (30) logée dans le passage (22) de la protubérance (7a) de la caisse (7), et deux bagues (31) montées respectivement entre la protubérance (7a) et les deux ailes (17) du berceau (15).

5. Système de suspension selon la revendication 1, **caractérisé en ce que** l'interface (I) est constituée par le boîtier latéral (BL), **en ce que** le bras de suspension (3) est monté en rotation sur le boîtier latéral (BL) au moyen de deux paliers (28), et **en ce que** le boîtier latéral (BL) est fixé à la caisse (7) du véhicule avec interposition des moyens de découplage (10) pour amortir également les vibrations engendrées par le boîtier latéral (BL).

6. Système de suspension selon la revendication 5, **caractérisé en ce que** les moyens de découplage (10) sont constitués par un bloc (40) en un matériau élastomère.

7. Système de suspension selon l'une quelconque des revendications précédentes, **caractérisé en ce que** le boîtier latéral (I) est monté à l'extérieur de la caisse (7) du véhicule.

## Claims

1. A trailing arm suspension system for the rear drive wheel of an automotive vehicle, in particular a cross-country vehicle, comprising a suspension arm (3) containing a gear coupled to a lateral gear box (BL) on the one hand and to the hub of the wheel (R) on the other, the suspension arm (3) being coupled to the lateral box (BL) by means of one bearing (28) at least, *wherein* the suspension arm (3) and lateral box (BL) are fastened to the vehicle body (7) by an interface (I) comprising uncoupling means (10) to damp the vibrations resulting from the impacting of a wheel (R) on an obstacle and the vibrations from the lateral box.

2. A suspension system according to Claim 1, wherein the interface (I) is constituted by an intermediate support (15) onto which the lateral box (BL) is fastened and the suspension arm (3) is mounted able to rotate by means of the bearing (28), and the intermediate support (15) is fastened to the vehicle body (7) by fastening means (20) juxtaposing uncoupling means (10) to also damp the vibrations generated by the lateral box (BL).

3. A suspension system according to Claim 2, wherein the intermediate support is constituted by a cradle (15), and the fastening means (20) are constituted by a bolt whose shank (20b) passes through holes (22) made in two wings (17) of the cradle (15) and through a perforation (22) in a protuberance (7a) projecting from the body (7) and positioned between the two wings (17).

4. A suspension system according to Claim 3, wherein the vibration uncoupling means (10) are constituted by rings through which the bolt shank (20b) passes and made of an elastomer material, one ring (30) housed in the passage (22) through the protuberance (7a) in the body (7), and two rings (31) respectively mounted between the protuberance (7a) and the two wings (17) of the cradle (15).

5. A suspension system according to Claim 1, wherein the interface (I) is constituted by the lateral box (BL), and the suspension arm (3) is mounted able to rotate on the lateral box (BL) by means of two bearings (28), and in that the lateral box (BL) is fastened to the vehicle body (7) with uncoupling means (10) positioned in between so as to also damp the vibrations generated by the lateral box (BL).

6. A suspension system according to Claim 5, wherein the uncoupling means (10) are constituted by a block (40) of an elastomer material.

7. A suspension system according to any one of the above Claims, wherein the lateral box (BL) is mounted on the outside of the vehicle body (7).

## Patentansprüche

1. Aufhängungssystem mit Längslenker für ein angetriebenes Hinterrad eines Kraftfahrzeuges, insbesondere eines Geländefahrzeuges, mit einem Aufhängungsarm (3), der eine mit einem seitlichen Getriebegehäuse (BL) einerseits und mit der Nabe des Rades (R) andererseits gekoppelte Kraftübertragung umfasst, wobei der Aufhängungsarm (3) mit Hilfe wenigstens eines Lagers (28) an das seitliche Gehäuse (BL) gekoppelt ist, das **dadurch gekennzeichnet ist, dass** der Aufhängungsarm (3) und das seitliche Gehäuse (BL) an der Fahrzeugkarosserie (7) über einen Anschluss (I) befestigt sind, welcher Mittel (10) zum Entkoppeln umfasst, um die Vibrationen, die von einem Schlag des Rades (R) gegen ein Hindernis herrühren, und die Vibrationen des seitlichen Gehäuses zu dämpfen.

2. Aufhängungssystem nach Anspruch 1, **dadurch gekennzeichnet, dass** der Anschluss (I) durch einen Zwischenträger (15) gebildet wird, an dem das seitliche Gehäuse (BL) befestigt und der Aufhängungsarm (3) drehbar mittels des Lagers (28) angebracht ist, und dass der Zwischenträger (15) an der Fahrzeugkarosserie (7) mittels eines Befestigungsmittels (20) unter Zwischenfügung der Mittel (10) zum Entkoppeln befestigt ist, um ebenfalls die durch das seitliche Gehäuse (BL) erzeugten Vibrationen zu dämpfen.

3. Aufhängungssystem nach Anspruch 2, **dadurch gekennzeichnet, dass** der Zwischenträger durch einen Sattel (15) gebildet wird und dass das Befestigungsmittel (20) durch einen Bolzen gebildet wird, dessen Stange (20b) in zwei Schenkel (17) des Sattels (15) gebohrte Durchgänge (22) und einen in eine Ausstülpung (7a), die von der Karosserie (7) hervorspringt und zwischen den beiden Schenkeln (17) angeordnet ist, gebohrten Durchgang (22) durchdringt.

4. Aufhängungssystem nach Anspruch 3, **dadurch gekennzeichnet, dass** die Mittel (10) zum Entkoppeln der Vibrationen durch von der Stange (20b) des Bolzens durchdrungene Ringe gebildet werden und aus einem Elastomer ausgeführt, wobei ein Ring (30) im Durchgang (22) der Ausstülpung (7a) der Karosserie (7) angeordnet ist und zwei Ringe (31) jeweils zwischen der Ausstülpung (7a) und den zwei Schenkeln (17) des Sattels (15) angebracht sind.

5. Aufhängungssystem nach Anspruch 1, **dadurch gekennzeichnet, dass** der Anschluss (I) durch das seitliche Gehäuse (BL) gebildet wird, dass der Aufhängungsarm (3) drehbar an dem seitlichen Gehäuse (BL) mittels zweier Lager (28) angebracht ist und dass das seitliche Gehäuse (BL) an der Fahrzeugkarosserie (7) unter Zwischenfügung von Mitteln (10) zum Entkoppeln befestigt ist, um die durch das seitliche Gehäuse (BL) erzeugten Vibrationen ebenfalls zu dämpfen.

6. Aufhängungssystem nach Anspruch 5, **dadurch gekennzeichnet, dass** die Mittel (10) zum Entkoppeln durch einen Block (40) aus einem Elastomer gebildet werden.

7. Aufhängungssystem nach irgendeinem der vorgenannten Ansprüche, **dadurch gekennzeichnet, dass** das seitliche Gehäuse (I) an der Außenseite der Fahrzeugkarosserie (7) angebracht ist.
